# FASCICULE DE BREVET EUROPEEN

(11) **EP 3 863 884 B1**
(45) Date de publication et mention de la délivrance du brevet: **28.12.2022**
(21) Numéro de dépôt: 19783040.9
(22) Date de dépôt: 08.10.2019
(51) Int. Cl.: B60N 2/00, B60N 2/58, B60N 2/70, G01B 7/16, G01L 1/18, G01L 1/20

(54) **MATELASSURE POUR SIÈGE DE VÉHICULE AUTOMOBILE**
SITZPOLSTER FÜR KRAFTFAHRZEUGSITZ
UPHOLSTERY FOR AUTOMOTIVE VEHICLE SEAT

(30) Priorité: 09.10.2018 FR 1859350
(43) Date de publication de la demande: 18.08.2021
(73) Titulaire: TESCA Pacific, 92977 Paris La Défense Cedex (FR)
(72) Inventeur: BEN LAGHA, Mohamed, 75008 Paris (FR); SANCHEZ, Santi, 75008 Paris (FR); TONELLATO, Christine, 75008 Paris (FR)
(74) Mandataire: Sayettat, Julien Christian
(86) Numéro de dépôt international: PCT/EP2019/077259
(87) Numéro de publication internationale: WO 2020/074537

(56) Documents cités:
- EP-A1- 2 682 724
- FR-A1- 2 848 930
- FR-A1- 3 058 369

## Description

L'invention concerne une matelassure pour siège de véhicule automobile.

Il est connu, notamment du document FR-3 058 369, de réaliser une matelassure pour siège de véhicule automobile, ladite matelassure comprenant, disposés successivement l'un sur l'autre :
- une coiffe de garnissage de ladite matelassure, ladite coiffe présentant une aire de réception d'un passager,
- une nappe de mesure de pression multizones, ladite nappe s'étendant en regard de l'ensemble de ladite aire, ladite nappe comprenant des moyens de connexion à un système électronique de mesure de la pression exercée par un occupant de ladite matelassure en différentes zones de ladite aire,
- un bloc de rembourrage élastiquement compressible.

En particulier, on connait de telles matelassures, dans lesquelles la nappe comprend :
o une couche souple de support,
o une première électrode comprenant une pluralité de premières lignes de conduction de courant, chacune desdites lignes présentant une première extrémité formant premier élément de contact,
o une deuxième électrode recouvrant ladite première électrode, ladite deuxième électrode comprenant une pluralité de deuxièmes lignes de conduction de courant, chacune desdites lignes présentant une deuxième extrémité formant deuxième élément de contact, chaque premier élément étant disposé en regard d'un deuxième élément respectif,
o une pluralité d'éléments de contact intermédiaires présentant des propriétés de piézorésistivité, chacun desdits éléments intermédiaires étant interposé entre un premier et un deuxième élément respectifs de manière à former une pluralité de capteurs de pression constitués par l'empilement desdits éléments de contact, lesdits capteurs se répartissant sur ladite couche de support de façon discrète,

Le document EP-2 682 724 enseigne un capteur de pression pour une surface de support en textile sur laquelle est imprimée une pâte ou une encre conductrice pouvant transmettre un signal électrique.

On rappelle ici que la piézorésistivité concerne la capacité d'un matériau à voir sa résistance électrique varier lorsqu'une contrainte mécanique lui est appliquée, en l'occurrence ici sous forme d'une compression réalisée par appui d'un occupant de la matelassure.

La mise en œuvre d'une telle matelassure permet de réaliser, au moyen du système électronique de mesure de pression, une « cartographie » du positionnement de l'occupant de ladite matelassure, en l'occurrence de la répartition de son poids, et donc de permettre par exemple un réglage de ladite matelassure tenant compte de la corpulence et de la position dudit occupant - par exemple par gonflement localisé de ladite matelassure dans des zones de moindre appui.

Il est connu d'utiliser une couche de support sous forme de feuille plastique, comme décrit par le document FR-2 848 930, ou encore de non-tissé.

Cependant, la présence d'une telle couche de support peut contribuer à raidir la matelassure et donc à altérer son confort en enfoncement.

En outre, la couche de support, lorsqu'elle est étanche, comme c'est le cas quand elle est sous forme de feuille plastique, nuit au confort hygrothermique de la matelassure.

L'invention a pour but de pallier ces inconvénients.

A cet effet, l'invention propose une matelassure pour siège de véhicule automobile, ladite matelassure comprenant, disposés successivement l'un sur l'autre :
- une coiffe de garnissage de ladite matelassure, ladite coiffe présentant une aire de réception d'un passager,
- une nappe de mesure de pression multizones, ladite nappe s'étendant en regard de l'ensemble de ladite aire, ladite nappe comprenant des moyens de connexion à un système électronique de mesure de la pression exercée par un occupant de ladite matelassure en différentes zones de ladite aire, ladite nappe comprenant :
   o une couche souple de support,
   o une première électrode comprenant une pluralité de premières lignes de conduction de courant, chacune desdites lignes présentant une première extrémité formant premier élément de contact,
   o une deuxième électrode recouvrant ladite première électrode, ladite deuxième électrode comprenant une pluralité de deuxièmes lignes de conduction de courant, chacune desdites lignes présentant une deuxième extrémité formant deuxième élément de contact, chaque premier élément étant disposé en regard d'un deuxième élément respectif,
   o une pluralité d'éléments de contact intermédiaires présentant des propriétés de piézorésistivité, chacun desdits éléments intermédiaires étant interposé entre un premier et un deuxième élément respectifs de manière à former une pluralité de capteurs de pression constitués par l'empilement desdits éléments de contact, lesdits capteurs se répartissant sur ladite couche de support de façon discrète,
- un bloc de rembourrage élastiquement compressible, ladite matelassure présentant en outre les caractéristiques suivantes :
   - ladite couche de support est en maille,
   - ladite première électrode est à base d'encre conductrice imprimée sur ladite couche de support,
   - ladite deuxième électrode est à base d'encre conductrice imprimée,
   - lesdits éléments de contact intermédiaires sont à base d'encre conductrice imprimée de conductivité moindre que celle des encres desdites électrodes,
   la coiffe comprenant :
   - une couche externe de revêtement,
   - une couche médiane de confort en mousse,
   - une couche interne en maille formant la couche de support.

On précise ici qu'une encre conductrice comprend une matrice polymérique dans laquelle sont dispersées des particules conductrices.

Une telle encre est imprimée notamment par sérigraphie ou encore par jet d'encre.

On rappelle ici (en référence à l'ouvrage « Le dictionnaire des textiles - Maggy Baum et Chantal Boyeldieu - les éditions de l'industrie textile - 2002) la définition d'une maille :
« Elément constitutif et fondamental d'une surface textile comportant un réseau plus ou moins lâche de fils entrelacés d'une boucle de fil à travers une autre. Unité élémentaire des textiles façonnés en tricot, crochet, dentelle, tulle, filet. Chaque maille enferme une ou plusieurs boucles de fil réunies différemment les unes aux autres suivant la technique utilisée. En modifiant les caractéristiques de la maille, on obtient ou l'on crée de nouvelles armures, d'autres reliefs.

Parties de la maille : toute maille est composée de :
- une tête : partie supérieure formant le demi-cercle de la boucle d'aiguille ;
- deux ailes ou jambes : parties étroites de la maille (parties latérales) reliant la tête et les pieds ;
- deux pieds : partie inférieure incurvée de la maille. »

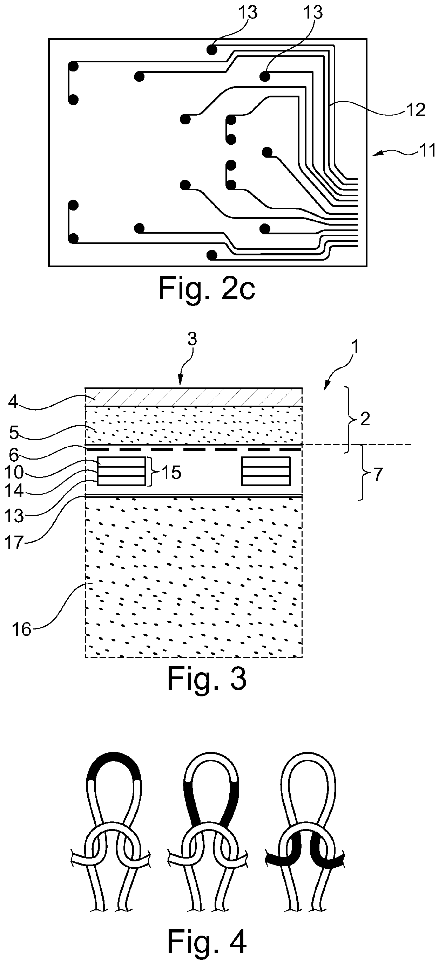

Nota : Ces différentes parties sont représentées en figure 4 présentée ci-après.

On précise ici que, dans toute la description, une couche en maille désigne une couche formée d'un réseau d'unités élémentaires telles que sus-décrites.

Avec l'agencement proposé :
- la couche de support, de par sa nature en maille, est fortement extensible ; l'encre étant elle aussi extensible, la couche de support ne contribue pas à raidir la matelassure,
- le fait que la couche de support soit poreuse permet de ne pas nuire au confort hygrothermique de la matelassure.

D'autres particularités et avantages de l'invention apparaîtront dans la description qui suit, faite en référence aux figures jointes, dans lesquelles :

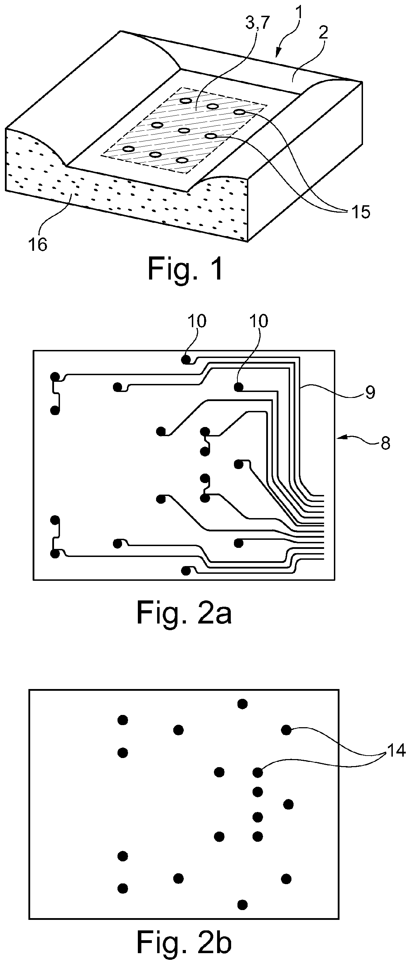

- la figure 1 est une vue schématique en perspective d'une matelassure pourvue d'une nappe de mesure de pression selon l'invention,
- les figures 2a, 2b et 2c sont des vues schématiques de face, selon une réalisation, d'une première électrode (figure 2a), d'éléments de contact intermédiaires (figure 2b) et d'une deuxième électrode (figure 2c),
- la figure 3 est une vue schématique en coupe partielle d'une matelassure pourvue d'une nappe de mesure selon une réalisation,
- la figure 4 est une représentation schématique d'une maille déclinée en trois images, les parties surlignées en noir représentant la tête (figure de gauche), les deux ailes ou jambes (figure centrale), et les deux pieds (figure de droite).

En référence aux figures, on décrit une matelassure 1 pour siège de véhicule automobile, ladite matelassure comprenant, disposés successivement l'un sur l'autre :
- une coiffe 2 de garnissage de ladite matelassure, ladite coiffe présentant une aire 3 de réception d'un passager,
- une nappe 7 de mesure de pression multizones, ladite nappe s'étendant en regard de l'ensemble de ladite aire, ladite nappe comprenant des moyens de connexion, non représentés, à un système électronique de mesure de la pression exercée par un occupant de ladite matelassure en différentes zones de ladite aire, ladite nappe comprenant :
   o une couche souple de support,
   o une première électrode 8 comprenant une pluralité de premières lignes 9 de conduction de courant, chacune desdites lignes présentant une première extrémité formant premier élément de contact 10 - se présentant ici sous forme d'une pastille plane circulaire -,
   o une deuxième électrode 11 recouvrant ladite première électrode, ladite deuxième électrode comprenant une pluralité de deuxièmes lignes 12 de conduction de courant, chacune desdites lignes présentant une deuxième extrémité formant deuxième élément de contact 13 - se présentant ici sous forme d'une pastille plane circulaire -, chaque premier élément 10 étant disposé en regard d'un deuxième élément 13 respectif,
   o une pluralité d'éléments de contact intermédiaires 14 - se présentant ici sous forme de pastilles planes circulaires - présentant des propriétés de piézorésistivité, chacun desdits éléments intermédiaires étant interposé entre un premier 10 et un deuxième 13 élément respectifs de manière à former une pluralité de capteurs 15 de pression constitués par l'empilement desdits éléments de contact, lesdits capteurs se répartissant sur ladite couche de support de façon discrète,
- un bloc de rembourrage 16 élastiquement compressible, notamment en mousse,
ladite matelassure présentant en outre les caractéristiques suivantes :
- ladite couche de support est en maille,
- ladite première électrode est à base d'encre conductrice imprimée sur ladite couche de support,
- ladite deuxième électrode est à base d'encre conductrice imprimée,
- lesdits éléments de contact intermédiaires sont à base d'encre conductrice imprimée.

Selon la réalisation représentée, la coiffe 2 comprend :
- une couche externe 4 de revêtement, par exemple en tissu ou en cuir,
- une couche médiane 5 de confort en mousse,
- une couche interne 6 en maille formant la couche de support.

Selon la réalisation représentée, les deuxièmes lignes 12 sont espacées des premières 9, de manière à éviter tout contact électrique entre les deux, le contact entre les électrodes 8,11 se faisant par les éléments de contact intermédiaires 14.

Selon la réalisation représentée :
- les éléments de contact intermédiaire 14 sont imprimés sur les premiers éléments de contact 10,
- la deuxième électrode 11 est imprimée sur la couche interne 6 et sur lesdits éléments intermédiaires.

En variante de réalisation non représentée :
- la deuxième électrode 11 est imprimée sur une couche additionnelle en maille, non représentée, disposée vers le bloc de rembourrage 16, ladite couche étant collée à la couche interne 6,
- les éléments de contact intermédiaires 14 sont imprimés au choix sur les premiers 10 ou deuxièmes 13 éléments de contact.

Le fait que la couche additionnelle soit en maille permet, comme dans le cas de la couche interne 6, de ne pas nuire au confort de la matelassure 1.

Selon une réalisation, la couche interne 6 :
- comprend entre 6 et 10 colonnes de fils/cm et entre 5 et 10 rangées de fils/cm,
- présente une masse surfacique comprise entre 25 et 50 g/m²,
- est formée de fils dont le titre est compris entre 40 et 120 dtex.

On dispose ainsi d'un maillage suffisamment dense qui permet que l'encre ne soit sensiblement pas absorbée dans l'épaisseur de la couche interne 6, ce qui permet de disposer d'un circuit électrique fiable.

Selon diverses réalisations, la couche interne 6 et/ou additionnelle est à base de polyester ou de polyamide.

Selon une réalisation, la coiffe 2 est chaussée sur le bloc de rembourrage 16.

En variante de réalisation, la coiffe 2 est surmoulée, au moins en partie, par le bloc de rembourrage 16, ledit bloc étant à base de mousse moulée.

Selon une réalisation, au moins une encre conductrice comprend une matrice à base de polyuréthanne.

Selon la réalisation représentée, la nappe 7 comprend en outre au moins une couche protectrice 17 étanche et électriquement isolante.

Selon la réalisation représentée, la couche protectrice 17 est disposée du côté du bloc de rembourrage 16.

Selon une réalisation non représentée, la couche protectrice 17 est disposée à l'opposé du bloc 16, de manière à protéger les électrodes 8,11 et les éléments de contact 14 de fluides déversés accidentellement sur la matelassure 1.

Selon une autre réalisation non représentée, la nappe 7 comprend deux couches protectrices 17, les électrodes 8,11 et éléments de contact 14 étant logés entre les deux.

On peut notamment prévoir qu'au moins une couche protectrice 17 soit à base d'encre imprimée.

Il peut notamment être prévu qu'une couche protectrice 17 soit imprimée directement sur la couche de support, la première électrode 8 étant alors imprimée sur ladite couche de support par l'intermédiaire de ladite couche protectrice.

En variante, au moins une couche protectrice 17 peut être à base de vernis ou de gel polymère.

Selon une réalisation, l'encre des électrodes 8,11 est dotée de particules conductrices comprenant un métal comme l'argent.

Selon une réalisation, l'encre des éléments de contact intermédiaire 14 comprend des particules conductrices à base de carbone ou de silice.

Selon une réalisation, les encres des électrodes 8,11 et des éléments de contact intermédiaires 14 sont déposées selon une épaisseur comprise entre 0,1 et 1,5 mm.

Selon une réalisation, l'épaisseur de la couche médiane 5 est comprise entre 1,5 et 5 mm et sa densité est notamment comprise entre 0,025 et 0,045, de manière à ne pas gêner la détection d'un occupant de la matelassure 1.

## Revendications

1. Matelassure (1) pour siège de véhicule automobile, ladite matelassure comprenant, disposés successivement l'un sur l'autre :
• une coiffe (2) de garnissage de ladite matelassure, ladite coiffe présentant une aire (3) de réception d'un passager,
• une nappe (7) de mesure de pression multizones, ladite nappe s'étendant en regard de l'ensemble de ladite aire, ladite nappe comprenant des moyens de connexion à un système électronique de mesure de la pression exercée par un occupant de ladite matelassure en différentes zones de ladite aire, ladite nappe comprenant :
o une couche souple de support,
o une première électrode (8) comprenant une pluralité de premières lignes (9) de conduction de courant, chacune desdites lignes présentant une première extrémité formant premier élément de contact (10),
o une deuxième électrode (11) recouvrant ladite première électrode, ladite deuxième électrode comprenant une pluralité de deuxièmes lignes (12) de conduction de courant, chacune desdites lignes présentant une deuxième extrémité formant deuxième élément de contact (13), chaque premier élément (10) étant disposé en regard d'un deuxième élément (13) respectif,
o une pluralité d'éléments de contact intermédiaires (14) présentant des propriétés de piézorésistivité, chacun desdits éléments intermédiaires étant interposé entre un premier (10) et un deuxième (13) élément respectifs de manière à former une pluralité de capteurs (15) de pression constitués par l'empilement desdits éléments de contact, lesdits capteurs se répartissant sur ladite couche de support de façon discrète,
• un bloc de rembourrage (16) élastiquement compressible,
ladite matelassure présentant en outre les caractéristiques suivantes :
• ladite couche de support est en maille,
• ladite première électrode est à base d'encre conductrice imprimée sur ladite couche de support,
• ladite deuxième électrode est à base d'encre conductrice imprimée,
• lesdits éléments de contact intermédiaires sont à base d'encre conductrice imprimée de conductivité moindre que celle des encres desdites électrodes, la coiffe (2) comprenant:
• une couche externe (4) de revêtement,
• une couche médiane (5) de confort de mousse,
• une couche interne (6) en maille formant la couche de support.

2. Matelassure selon la revendication 1, **caractérisée en ce que** :
• les éléments de contact intermédiaire (14) sont imprimés sur les premiers éléments de contact (10),
• la deuxième électrode (11) est imprimée sur la couche interne (6) et sur lesdits éléments intermédiaires.

3. Matelassure selon la revendication 1, **caractérisée en ce que** :
• la deuxième électrode (11) est imprimée sur une couche additionnelle en maille disposée vers le bloc de rembourrage (16), ladite couche étant collée à la couche interne (6),
• les éléments de contact intermédiaires (14) sont imprimés au choix sur les premiers (10) ou deuxièmes (13) éléments de contact.

4. Matelassure selon l'une quelconque des revendications 1 à 3, **caractérisée**
**en ce que** la couche interne (6) :
• comprend entre 6 et 10 colonnes de fils/cm et entre 5 et 10 rangées de fils/cm,
• présente une masse surfacique comprise entre 25 et 50 g/m²,
• est formée de fils dont le titre est compris entre 40 et 120 dtex.

5. Matelassure selon l'une quelconque des revendications 1 à 4, **caractérisée en ce que** la coiffe (2) est chaussée sur le bloc de rembourrage (16).

6. Matelassure selon l'une quelconque des revendications 1 à 4, **caractérisée en ce que** la coiffe (2) est surmoulée, au moins en partie, par le bloc de rembourrage (16), ledit bloc étant à base de mousse moulée.

7. Matelassure selon l'une quelconque des revendications 1 à 6, **caractérisée en ce que** la nappe (7) comprend en outre au moins une couche protectrice (17) étanche et électriquement isolante.

## Patentansprüche

1. Polsterung (1) für einen Kraftfahrzeugsitz, wobei die Polsterung nacheinander angeordnet aufeinander Folgendes umfasst:
• einen Verkleidungsüberzug (2) für die Polsterung, wobei der Überzug eine Aufnahmefläche (3) für einen Insassen aufweist,
• eine Matte (7) zur Druckmessung in mehreren Bereichen, wobei sich die Matte über die gesamte Fläche erstreckt, die Matte Anschlussmittel an ein elektronisches Messsystem des Drucks umfasst, der durch eine auf der Polsterung sitzenden Person in verschiedenen Bereichen der Fläche ausgeübt wird, wobei die Matte umfasst:
∘ eine flexible Trägerschicht,
∘ eine erste Elektrode (8), die eine Vielzahl von ersten Leitungen (9) zur Stromleitung umfasst, wobei jede der Leitungen ein erstes Ende aufweist, das ein erstes Kontaktelement (10) bildet,
∘ eine zweite Elektrode (11), die die erste Elektrode abdeckt, wobei die zweite Elektrode eine Vielzahl von zweiten Leitungen (12) zur Stromleitung umfasst, wobei jede der Leitungen ein zweites Ende aufweist, das ein zweites Kontaktelement (13) bildet, wobei jedes erste Element (10) auf Höhe eines jeweiligen zweiten Elements (13) angeordnet ist,
∘ eine Vielzahl von Zwischenkontaktelementen (14), die Piezoresistivitätseigenschaften aufweisen, wobei jedes der Zwischenelemente zwischen einem jeweiligen ersten (10) und einem zweiten (13) Element eingesetzt ist, um eine Vielzahl von Drucksensoren (15) zu bilden, die durch die Stapelung der Kontaktelemente gebildet werden, wobei sich die Sensoren in diskreter Form auf der Trägerschicht verteilen,
• einen elastisch verdichtbaren Füllmaterialblock (16), wobei die Polsterung weiter die folgenden Merkmale aufweist:
• die Trägerschicht ist aus Wirkware,
• die erste Elektrode ist auf Grundlage einer leitfähigen Tinte, die auf die Trägerschicht aufgedruckt ist,
• die zweite Elektrode ist auf Grundlage einer aufgedruckten leitfähigen Tinte,
• die Zwischenkontaktelemente sind auf Grundlage einer aufgedruckten leitfähigen Tinte mit einer geringeren Leitfähigkeit als jener der Tinten der Elektroden,
wobei der Überzug (2) umfasst:
• eine Außenschicht (4) zur Verkleidung,
• eine Komfortzwischenschicht (5) aus Schaumstoff,
• eine Innenschicht (6) aus Wirkware, die die Trägerschicht bildet.

2. Polsterung nach Anspruch 1, **dadurch gekennzeichnet, dass**:
• die Zwischenkontaktelemente (14) auf die ersten Kontraktelemente (10) gedruckt sind,
• die zweite Elektrode (11) auf die Innenschicht (6) und auf die Zwischenelemente gedruckt ist.

3. Polsterung nach Anspruch 1, **dadurch gekennzeichnet, dass**:
• die zweite Elektrode (11) auf eine zusätzliche Schicht aus Wirkware gedruckt ist, die zum Füllmaterialblock (16) hin angeordnet ist, wobei die Schicht auf die Innenschicht (6) geklebt ist,
• die Zwischenkontaktelemente (14) wahlweise auf die ersten (10) oder zweiten (13) Kontaktelemente gedruckt sind.

4. Polsterung nach einem der Ansprüche 1 bis 3, **dadurch gekennzeichnet, dass** die Innenschicht (6):
• zwischen 6 und 10 Fadenlinien/cm und zwischen 5 und 10 Fadenreihen/cm umfasst,
• ein Flächengewicht aufweist, das zwischen 25 und 50 g/m² liegt,
• aus Fäden gebildet ist, deren Titer zwischen 40 und 120 dtex liegt.

5. Polsterung nach einem der Ansprüche 1 bis 4, **dadurch gekennzeichnet, dass** der Überzug (2) über den Füllmaterialblock (16) gezogen ist.

6. Polsterung nach einem der Ansprüche 1 bis 4, **dadurch gekennzeichnet, dass** der Überzug (2) mindestens teilweise durch den Füllmaterialblock (16) umspritzt ist, wobei der Block auf Grundlage von geformtem Schaumstoff ist.

7. Polsterung nach einem der Ansprüche 1 bis 6, **dadurch gekennzeichnet, dass** die Matte (7) weiter mindestens eine dichte und elektrisch isolierende Schutzschicht (17) umfasst.

## Claims

1. Padding (1) for a motor vehicle seat, said padding comprising, disposed successively one on the other:
• a cover (2) upholstering said padding, said cover having an area (3) for receiving a passenger,
• a sheet (7) for measuring multizone pressure, said sheet extending facing the whole of said area, said sheet comprising means for connection to an electronic system for measuring the pressure exerted by an occupant of said padding at various zones of said area, said sheet comprising:
o a flexible support layer,
o a first electrode (8) comprising a plurality of first current-conduction lines (9), each of said lines having a first end forming a first contact element (10),
o a second electrode (11) overlapping said first electrode, said second electrode comprising a plurality of second current-conduction lines (12), each of said lines having a second end forming a second contact element (13), each first element (10) being disposed facing a respective second element (13),
o a plurality of intermediate contact elements (14) having piezoresistive properties, each of said intermediate elements being inserted between a respective first (10) and second (13) element so as to form a plurality of pressure sensors (15) formed by the stack of said contact elements, said sensors being distributed over said support layer in a discrete manner,
• an elastically compressible stuffing block (16), said padding further comprising the following characteristics:
• said support layer is made of mesh,
• said first electrode is made from conductive ink printed on said support layer,
• said second electrode is made from printed conductive ink,
• said intermediate contact elements are made from printed conductive ink with less conductivity than that of the inks of said electrodes, the cover (2) comprising:
• an external cladding layer (4),
• a middle comfort layer (5) made from foam,
• an internal layer (6) made from a mesh forming the support layer.

2. Padding according to claim 1, **characterised in that**:
• the intermediate contact elements (14) are printed on the first contact elements (10),
• the second electrode (11) is printed on the internal layer (6) and on said intermediate elements.

3. Padding according to claim 1, **characterised in that**:
• the second electrode (11) is printed on an additional layer made from mesh disposed towards the stuffing block (16), said layer being glued to the internal layer (6),
• the intermediate contact elements (14) are printed as required on the first (10) or second (13) contact elements.

4. Padding according to any one of claims 1 to 3, **characterised in that** the internal layer (6):
• comprises between 6 and 10 columns of threads/cm and between 5 and 10 rows of threads/cm,
• has a mass per surface area of between 25 and 50 g/m²,
• is formed from threads the count of which is between 40 and 120 dtex.

5. Padding according to any one of claims 1 to 4, **characterised in that** the cover (2) is fitted on the stuffing block (16).

6. Padding according to any one of claims 1 to 4, **characterised in that** the cover (2) is at least partly overmoulded by the stuffing block (16), said block being based on moulded foam.

7. Padding according to any one of claims 1 to 6, **characterised in that** the sheet (7) further comprises at least one impervious and electrically insulating protective layer (17).
